# EUROPÄISCHE PATENTSCHRIFT

(11) **EP 1 950 462 B1**
(45) Veröffentlichungstag und Bekanntmachung des Hinweises auf die Patenterteilung: **25.08.2010**
(21) Anmeldenummer: 07101102.7
(22) Anmeldetag: 24.01.2007
(51) Int. Cl.: F16H 61/06

(54) **Verfahren zum Betrieb einer ein Schaltgetriebe und einen Motor umfassenden Antriebseinheit**
Method for operating a drive unit comprising a manual transmission and an engine
Procédé de commande d'une unité d'entrainement comprenant une boîte de vitesses et un moteur

(43) Veröffentlichungstag der Anmeldung: 30.07.2008
(73) Patentinhaber: Getrag Ford Transmissions GmbH, 50735 Köln (DE)
(72) Erfinder: Siebigteroth, Marco, 53773, Hennef (DE); Prenger-Berninghoff, Axel, 41812, Erkelenz (DE)

(56) Entgegenhaltungen:
- EP-A- 1 450 074
- EP-A1- 1 507 103
- DE-A1- 4 204 401
- DE-A1- 10 308 692

## Beschreibung

Die Erfindung betrifft ein Verfahren zum Betrieb einer Antriebseinheit, die ein Schaltgetriebe und einen Motor umfasst.

Aus der EP 1 507 103 A1 ist ein Verfahren zum Schalten eines Schaltgetriebes in Form eines Doppelkupplungsgetriebes bekannt, bei dem eine erste Kupplung auf einem ersten Getriebepfad und eine zweite Kupplung auf einem zweiten Getriebepfad über verschiedene Gänge den Motor mit einem Abtrieb verbinden. Vor einem Schaltvorgang wird dabei über die erste Kupplung ein Motordrehmoment auf dem ersten Getriebepfad zum Abtrieb übertragen, wobei ein eingelegter Gang des ersten Getriebepfades ein Übersetzungsverhältnis festlegt. Unter Berücksichtigung dieses Übersetzungsverhältnisses liegt an einer Welle des Abtriebs ein erstes Abtriebsmoment an. Die zweite Kupplung überträgt vor dem Schaltvorgang kein Drehmoment, entsprechend ist der der zweiten Kupplung zugeordnete Getriebepfad lastfrei. Aufgrund der Lastfreiheit ist es möglich, in dem zweiten Getriebepfad vor dem Schaltvorgang einen Gang einzulegen bzw. vorzuwählen. Bei dem anstehenden Schaltvorgang stellt dieser vorgewählte Gang einen Zielgang dar, während der eingelegte Gang des lastführenden Getriebepfades einem Quellgang entspricht.

Innerhalb des Schaltvorgangs erfolgt zunächst eine Phase der Drehmomentübergabe von der ersten Kupplung auf die zweite Kupplung. Dabei wird die zweite Kupplung geschlossen, so dass ausgehend von einem Drehmoment gleich null das durch die zweite Kupplung übertragene Drehmoment einem gewissen Verlauf folgend ansteigt. Gleichzeitig reduziert sich das Drehmoment, welches von der ersten Kupplung übertragen wird, bis dieses gleich null ist. Ist die Phase der Drehmomentübergabe abgeschlossen, dh. wird das Motordrehmoment nun vollständig von der zweiten Kupplung übertragen, beginnt eine Phase der Synchronisierung der Motordrehzahl. Dabei wird der Motor abgebremst bzw. beschleunigt, bis die Motordrehzahl der Drehzahl des zweiten Getriebepfades entspricht.

Handelt es sich beim Schaltvorgang um ein Hochschalten, weist der Quellgang ein kleineres Übersetzungsverhältnis als der Zielgang auf. Entsprechend wird durch den Schaltvorgang das an der Welle des Abtriebs anliegende Drehmoment reduziert, soweit das Motordrehmoment konstant gehalten wird.

Es ist Antriebseinheiten von Kraftfahrzeugen bekannt, in der Phase der Synchronisierung der Motordrehzahl oder auch nach dieser Phase das Motordrehmoment einem Drehmomentzielwert anzupassen, der sich beispielsweise aus der Gaspedalstellung vor dem Schaltvorgang ableiten lässt. Wird mehr Drehmoment angefordert, liegt der Drehmomentzielwert über dem (augenblicklichen) Motordrehmoment, so dass durch die Drehmomentanpassung das Motordrehmoment auf den Drehmomentzielwert angehoben wird. Dadurch kann zumindest teilweise die Absenkung des an der Antriebswelle anliegenden Drehmoments kompensiert werden. Eine Anpassung der Motordrehzahl in der Phase der Synchronisierung oder erst danach bedeutet, dass das an der Abtriebswelle anliegende Drehmoment beim Hochschalten zunächst einmal einbricht, was den Fahrkomfort im Kraftfahrzeug fühlbar beeinträchtigen kann.

In der DE 42 04 401 wird eine Einrichtung zur Steuerung eines Abtriebsmoments eines automatisierten Schaltgetriebes eines Fahrzeugs offenbart, bei der das Abtriebsmoment während eines Schaltvorgangs konstant gehalten wird. Erreicht wird die Konstanthaltung des Abtriebsmoments durch eine Erhöhung des Motordrehmoments, welche in einer Phase einer Drehmomentübergabe stattfindet. Dies soll zu einer Vermeidung eines jeglichen Rucks beim Schaltvorgang führen. Insbesondere bei Hochschaltvorgängen unter Volllast oder nahe der Volllast ist es jedoch nicht möglich, das Motordrehmoment in dem Umfang zu erhöhen, dass das Abtriebsmoment während des Schaltvorgangs konstant bleibt.

Der Erfindung liegt daher die Aufgabe zu Grunde, ein Verfahren zum Betrieb einer ein Schaltgetriebe und einen Motor umfassenden Antriebseinheit bereitzustellen, durch das bei Einsatz in einem Kraftfahrzeug ein hoher Fahrkomfort erzielt werden kann.

Die der Erfindung zu Grunde liegende Aufgabe wird mit den Merkmalen des Anspruchs 1 gelöst. Bevorzugte Ausführungsbeispiele können den Unteransprüchen entnommen werden.

Das Verfahren gemäß Anspruch 1 zeichnet sich dadurch aus, dass die Anpassung des Motordrehmoments an den von außen vorgegebenen Drehmomentzielwert im wesentlichen während der Phase der Drehmomentübergabe erfolgt. Dies bedeutet, dass das Motordrehmoment durch entsprechendes Anheben oder Absenken bereits vor der Phase der Synchronisierung der Motordrehzahl dem Drehmomentzielwert zumindest näherungsweise entspricht. In der Phase der Synchronisierung der Motordrehzahl oder auch danach können weitere Eingriffe zur Beeinflussung des Motordrehmoments vorgesehen sein, um beispielsweise das Motordrehmoment in engeren Grenzen an den Drehmomentzielwert heran zu führen.

Gegenüber dem aus dem Stand der Technik bekannten Verfahren zum Betrieb einer Antriebseinheit, bei der die Anpassung des Motordrehmoments erst in der Phase der Synchronisierung der Motordrehzahl erfolgt, weist das erfindungsgemäße Verfahren den Vorteil auf, dass in der Phase der Drehmomentübergabe das Abtriebsmoment nicht auf einen niedrigen Minimalwert absackt, wenn es sich bei dem Schaltvorgang um ein Hochschalten handelt. Beim erfindungsgemäßen Verfahren wird die Reduzierung des Abtriebsmomentes, die durch das kleinere Übersetzungsverhältnis des Zielgangs beim Hochschalten bedingt ist, schon während der Phase der Drehmomentübergabe durch einen Anstieg des Motordrehmoments teilweise ausgeglichen.

In einem bevorzugten Ausführungsbeispiel erfolgt die Anpassung des Motordrehmoments durch einen linearen Anstieg oder Abstieg des Motordrehmoments. Ein Anstieg ist dann gegeben, wenn der Drehmomentzielwert vor dem Schaltvorgang über dem Motordrehmoment liegt. Entsprechend handelt es sich bei der Anpassung des Motordrehmoments um eine Absenkung, wenn der Drehmomentzielwert vor dem Schaltvorgang unterhalb des Motordrehmoments liegt.

Die Anpassung des Motordrehmoments an den Drehmomentzielwert kann auch in Stufen oder in einem stetigen Verlauf stattfinden, dessen Gradient nicht konstant ist. Beispielsweise kann der Anstieg oder Abstieg progressiv oder degressiv gestaltet werden.

Vorzugsweise erstreckt sich die Anpassung des Motordrehmoments im wesentlichen über die gesamte Phase der Drehmomentübergabe. Die Phase der Drehmomentübergabe beginnt dabei in einem Zeitpunkt t₁, bei dem die zuvor lastfreie zweite Kupplung ein Drehmoment überträgt, welches in der Phase der Drehmomentübergabe kontinuierlich ansteigt. Die Phase der Drehmomentübergabe endet in einem Zeitpunkt t₂, in dem die erste Kupplung, die zu Beginn der Phase der Drehmomentübergabe das gesamte Motordrehmoment übertragen hat, im wesentlichen kein Drehmoment mehr überträgt. Dadurch, dass der gesamte Zeitraum zwischen den Zeitpunkten t₁ und t₂ genutzt wird, das Motordrehmoment dem Drehmomentzielwert anzupassen, kann ein Schaltvorgang mit hohem Fahrkomfort realisiert werden.

In einem bevorzugten Ausführungsbeispiel ist in der Phase der Drehmomentübergabe ein Verhältnis zwischen der Änderung des Motordrehmomentes und dem Drehmoment, das von der zweiten Kupplung übertragen wird, im wesentlichen konstant. Steigt beispielsweise zwischen den Zeitpunkten t₁ und t₂ in der Phase der Drehmomentübergabe das durch die zweite Kupplung übertragene Drehmoment linear an, so erfolgt zweckmäßig der Anstieg des Motordrehmoments auf den Drehmomentzielwert ebenfalls linear. Dies führt zu einem konstanten Verhältnis zwischen Änderung des Motordrehmoments und dem durch die zweite Kupplung übertragenen Drehmoment.

In einem bevorzugten Ausführungsbeispiel wird in der Phase der Synchronisierung der Motordrehzahl das Motordrehmoment für einen begrenzten Zeitraum abgesenkt, wobei am Anfang und am Ende der Synchronisierung der Motordrehzahl das Motordrehmoment gleich groß ist. Handelt es sich bei dem Schaltvorgang um ein Hochschalten, so wird in der Phase der Synchronisierung der Motordrehzahl der Motor entsprechend des kleineren Übersetzungsverhältnisses des Zielgangs abgebremst, wodurch Massenträgheitsmomente zumindest teilweise das Abtriebsmoment tragen. Daher kann entsprechend der Massenträgheitsmomente das Motordrehmoment abgesenkt werden. Handelt es sich hingegen beim Schaltvorgang um ein Runterschalten, d.h. der Zielgang weist ein höheres Übersetzungsverhältnis auf als der Quellgang, so muss der Motor beschleunigt werden, wozu aufgrund der Massenträgheitsmomente zusätzliches Motordrehmoment bereitgestellt werden muss. In diesem Fall wird das Motordrehmoment in der Phase der Synchronisierung der Motordrehzahl zumindest temporär angehoben.

Da sich die Phase der Synchronisierung der Motordrehzahl unmittelbar der Phase der Drehmomentübergabe anschließt, entspricht der Zeitpunkt t₂ dem Anfang der Phase der Synchronisierung. In einem Zeitpunkt t₃ ist die Phase der Synchronisierung der Motordrehzahl abgeschlossen. In diesem Zeitpunkt t₃ entspricht die Motordrehzahl der Drehzahl des zweiten Getriebepfades, der nach dem Schaltvorgang Drehmoment zum Abtrieb bzw. zur Abtriebswelle überträgt. Mit anderen Worten: Bis zum Zeitpunkt t₃ besteht eine Differenz zwischen der Motordrehzahl und der Drehzahl des zweiten Getriebepfades, so dass die zweite Kupplung im Schlupfbetrieb arbeitet.

Mit Kupplungen sind hier alle mechanischen Elemente gemeint, die eine schaltbare reib- und/oder kraftschlüssige Verbindung zwischen Wellen herstellen können. Dies können beispielsweise trockene Reibkupplungen oder nasse Reibkupplungen sein. Der Aufbau der Drehmomentkapazität einer Kupplung, d.h. die Betätigung der Kupplung, kann dabei durch hydraulische, mechani sche, elektrische, pneumatische oder durch andere geeignete Stellglieder erfolgen. Bauartbedingt ist weiterhin selbstverständlich, dass sowohl die erste Kupplung als auch die zweite Kupplung entweder eine lastabgebende oder eine lastannehmende Kupplung sein können, je nachdem, in welchem Gang vor dem Schaltvorgang Drehmoment gerade übertragen wird und in welchen Gang geschaltet werden soll.

Anhand der in der Zeichnung dargestellten Diagramme soll die Erfindung näher erläutert werden. Es zeigen:
- Figur 1: Drehzahlverläufe bei einem Schaltvorgang;
- Figur 2: die Drehmomentverläufe bei einem Verfahren gemäß dem Stand der Technik;
- Figur 3: die Drehmomentverläufe bei einem erfindungsgemäßen Verfahren; und
- Figur 4: ein Vergleich sich ergebender Abtriebsdrehmomente bei den in Figur 2 und 3 beschriebenen Schaltvorgängen.

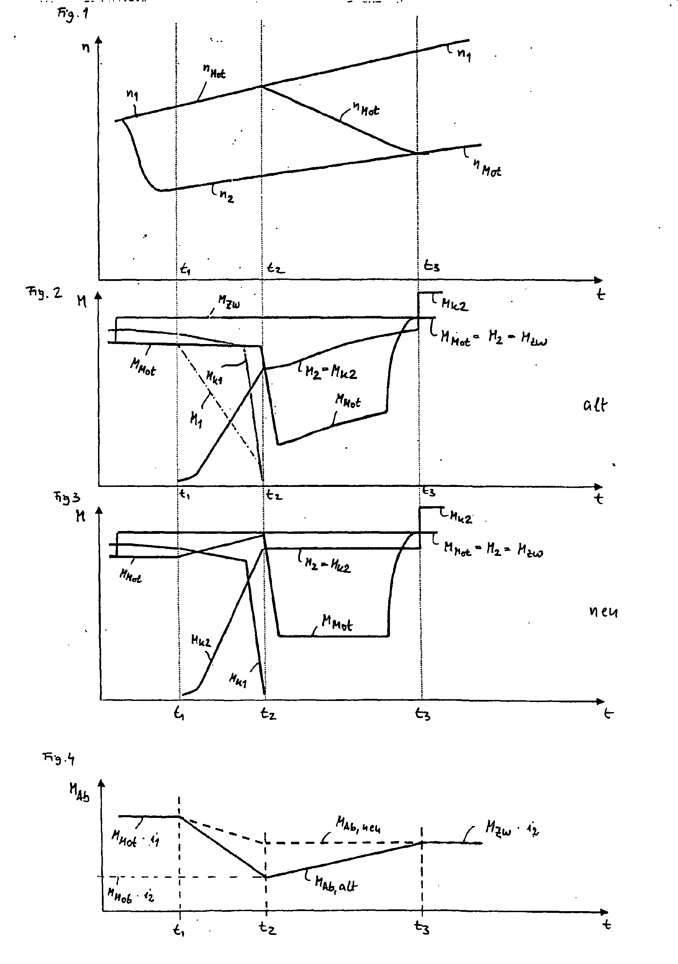

Figur 1 zeigt drei verschiedene Drehzahlverläufe bei einem Schaltvorgang von einem ersten Vorwärtsgang in einen zweiten Vorwärtsgang eines in einem Kraftfahrzeug eingebauten Doppelkupplungsgetriebes. Antriebsseitig soll das Doppelkupplungsgetriebe mit einem Motor verbunden sein, beispielsweise mit einem Verbrennungsmotor wie ein Otto-Motor oder ein Diesel-Motor.

Vor dem Schaltvorgang, d.h. vor einem Zeitpunkt t₁ weist der Motor eine Motordrehzahl n_{Mot} auf, die einer Drehzahl n₁ einer Eingangswelle eines ersten Teilgetriebes des Doppelkupplungsgetriebes entspricht. Wie der Figur 1 entnommen werden kann, weisen die Drehzahlen n_{Mot} bzw. n₁ eine gewisse Steigung auf, d.h. das Kraftfahrzeug befindet sich in einer Beschleunigungsphase.

Des Weiteren zeigt Figur 1 eine Drehzahl n₂ einer Eingangswelle eines zweiten Teilgetriebes des Doppelkupplungsgetriebes. In diesem zweiten Teilgetriebe ist der zweite Vorwärtsgang bereits eingelegt. Da das Übersetzungsverhältnis des zweiten Ganges kleiner ist als das Übersetzungsverhältnis des ersten Ganges, liegt die Drehzahl n₂ unterhalb der Drehzahl n₁.

Figur 2 zeigt diverse Drehmomentverläufe bei dem Schaltvorgang vom ersten Vorwärtsgang in den zweiten Vorwärtsgang gemäß einem bekannten Verfahren. Zu Beginn des Schaltvorgangs, d.h. vor dem Zeitpunkt t₁, stellt der Motor ein Motordrehmoment M_{Mot} bereit, das über eine erste Kupplung des Doppelkupplungsgetriebes auf das erste Teilgetriebe übertragen wird. Vor dem Schaltvorgang weist die erste Kupplung eine Drehmomentkapazität M_{K1} auf, die größer ist als das Motordrehmoment M_{Mot}. Dies bedeutet, dass die erste Kupplung das Motordrehmoment M_{Mot} schlupffrei auf das erste Teilgetriebe weitergibt. Des Weiteren ist der Figur 2 ein Drehmomentzielwert M_{zw} dargestellt, der vor dem Schaltvorgang über dem Motordrehmoment M_{Mot} liegt und dem Drehmomentwunsch des Fahrers im Kraftfahrzeug entsprechen soll. Dieser Drehmomentzielwert M_{zw} lässt sich beispielsweise aus der Gaspedalstellung ableiten. Beim hier beschriebenen Schaltvorgang handelt es sich um ein Hochschalten im Zugbetrieb. Die folgenden Ausführungen lassen sich auf andere Schaltvorgänge sinngemäß übertragen, beispielsweise auf ein Runterschalten im Schubbetrieb.

Im Zeitpunkt t₁ beginnt eine Phase der Drehmomentübergabe des Schaltvorgangs. In dieser Phase wird eine zweite Kupplung des Doppelkupplungsgetriebes geschlossen, so dass eine Drehmomentkapazität M_{K2} der zweiten Kupplung zwischen dem Zeitpunkt t₁ und einem Zeitpunkt t₂, der einem Ende der Phase der Drehmomentübergabe entspricht, kontinuierlich ansteigt. Die zweite Kupplung überträgt dabei ein Drehmoment M₂ im Schlupfbetrieb, wobei das Drehmoment M₂ der jeweils augenblicklichen Drehmomentkapazität M_{K2} entspricht. In dem Maße, wie das von der zweiten Kupplung übertragene Drehmoment M₂ ansteigt, sinkt ein von der ersten Kupplung übertragenes Drehmoment M₁. Der Verlauf des von der ersten Kupplung übertragenen Drehmoments M₁ ist in Figur 2 strichpunktiert skizziert. Die Summe der übertragenen Drehmomente M₁ und M₂ entspricht dem Motordrehmoment M_{Mot}.

Zum Zeitpunkt t₂ ist die Drehmomentübergabe praktisch abgeschlossen. Ab dem Zeitpunkt t₂ überträgt die erste Kupplung des Doppelkupplungsgetriebes praktisch kein Drehmoment mehr, während nun das nahezu gesamte Motordrehmoment M_{Mot} von der zweiten Kupplung übertragen wird. In dem Zeitpunkt t₂ beginnt nun eine Phase der Synchronisierung der Motordrehzahl n_{Mot}. Die zweite Kupplung befindet sich weiterhin im Schlupfbetrieb, so dass das übertragene Drehmoment M₂ der zweiten Kupplung der augenblicklich geltenden Drehmomentkapazität M_{K2} der zweiten Kupplung entspricht. Wie der Figur 1 entnommen werden kann, sinkt die Motordrehzahl n_{Mot} zwischen dem Zeitpunkt t₂ und einem Zeitpunkt t₃, der das Ende der Phase der Synchronisierung der Motordrehzahl darstellt, kontinuierlich von der Drehzahl n₁ auf die Drehzahl n₂. Da zwischen den Zeitpunkten t₂ und t₃ der Motor abgebremst wird, kann das Motordrehmoment M_{Mot} reduziert werden, da die durch die Abbremsung hervorgetretenen Massenträgheitsmomente des Motors das in Figur 4 dargestellte Abtriebsmoment des Doppelkupplungsgetriebes stützen. Neben der konstanten Reduktion aufgrund der dynamischen Effekte wird das Motordrehmoment M_{Mot} zwischen den Zeitpunkten t₂ und t₃ nahezu mit konstanter Steigung angehoben.

Zum Ende der Phase der Synchronisierung der Motordrehzahl n_{Mot} entspricht das Motordrehmoment M_{Mot} dem Drehmomentzielwert M_{zw}. Zudem endet im Zeitpunkt t₃ bzw. kurz davor der Schlupfbetrieb der zweiten Kupplung, da nun die ab dem Zeitpunkt t₃ gegebene Drehmomentkapazität M_{K2} der zweiten Kupplung größer ist als das anliegende Motordrehmoment M_{Mot}.

Figur 4 zeigt das Abtriebsdrehmoment M_{Ab,alt}, das sich auf einer Abtriebsseite des Doppelkupplungsgetriebes einstellt, wenn der Schaltvorgang gemäß der Figur 2 durchgeführt wird. Das durch die durchgezogene Linie dargestellte Abtriebsmoment M_{Ab,alt}, ergibt sich vor dem Zeitpunkt t₁ aus dem Produkt von Motordrehmoment M_{Mot} und dem Übersetzungsverhältnis i₁ des ersten Ganges. In der Phase der Drehmomentübergabe (Zeitraum zwischen t₁ und t₂) sinkt das Abtriebsdrehmoment auf ein Niveau, das dem Produkt aus Motordrehzahl Mₘₒₜ und einem Übersetzungsverhältnis i₂ des zweiten Ganges entspricht. In der Phase der Synchronisierung der Motordrehzahl (Zeitraum zwischen den Zeitpunkten t₂ und t₃) steigt das Abtriebsdrehmoment M_{Ab,alt}, auf einen Wert an, der dem Produkt aus Drehmomentzielwert M_{zw} und dem Übersetzungsverhältnis des zweiten Ganges entspricht. Die Zunahme des Abtriebsdrehmomentes M_{Ab,alt}, zwischen den Zeitpunkten t₂ und t₃ resultiert aus einem Anstieg des Motordrehmomentes M_{Mot} (siehe Figur 2), wobei das Abtriebsmoment M_{Ab,alt}, durch dynamische Effekte aufgrund der Drehzahlreduktion im Motor gestützt wird.

Figur 3 zeigt die Drehmomente gemäß dem erfindungsgemäßen Verfahren. In der Phase der Drehmomentübergabe wird beginnend im Zeitpunkt t₁ das Motordrehmoment M_{Mot} in Form eines linearen Anstiegs auf den Drehmomentzielwert M_{zw} angehoben. In dem Zeitpunkt t₂ entspricht das Motordrehmoment M_{Mot} dem Drehmomentzielwert M_{zw}. Im Vergleich zu Figur 2 steigt die Drehmomentkapazität M_{K2} der zweiten Kupplung zwischen t₁ und t₂ schneller an, so dass die Erhöhung des Motordrehmoments M_{Mot} in der Phase der Drehmomentübergabe hauptsächlich oder im wesentlichen von der zweiten Kupplung übertragen wird. Wie auch im Verfahren gemäß Figur 2 wird nach dem Zeitpunkt t₂ die Motordrehzahl n_{Mot} der Drehzahl n₂ der Eingangswelle des zweiten Teilgetriebes angepasst. Dabei arbeitet die zweite Kupplung im Schlupfbetrieb, so dass das von der zweiten Kupplung übertragene Drehmoment M₂ der Drehmomentkapazität M_{K2} der zweiten Kupplung entspricht. Aufgrund der dynamischen Effekte bei der Drehzahlanpassung wird das Motordrehmoment M_{Mot} zwischen t₂ und t₃ auch hier um einen konstanten Wert abgesenkt. Eine kontinuierliche Anhebung von Zeitpunkt t₂ bis zum Zeitpunkt t₃, so wie es Figur 2 zeigt, ist in dem erfindungsgemäßen Verfahren nicht vorgesehen, da bereits zum Zeitpunkt t₂ das Motordrehmoment M_{Mot} wie auch im Zeitpunkt t₃ dem Drehmomentzielwert M_{zw} entspricht.

Wie der Figur 4 entnommen werden kann, führt das erfindungsgemäße Verfahren zu einem Abtriebsdrehmoment M_{Ab,neu}, das im Vergleich zum Abtriebsdrehmoment M_{Ab,alt}, kein Minimum im Zeitpunkt t₂ aufweist. Durch die Zunahme des Motordrehmoments M_{Mot} bereits in der Phase der Drehmomentübergabe wird die Reduktion des Abtriebsdrehmomentes abgeschwächt. Dies führt zu einem gleichförmigeren Verlauf des Abtriebsdrehmoments an der Abtriebsseite des Doppelkupplungsgetriebes, was den Fahrkomfort beim Schalten merklich erhöht.

Das erfindungsgemäße Verfahren lässt sich vorzugsweise bei Diesel-Motoren anwenden, deren maximale Drehmomente im unteren oder mittleren Drehzahlbereich auftreten. Natürlich ist dieses Verfahren auch bei Otto-Motoren möglich. Das erfindungsgemäße Verfahren stößt jedoch dann an seine Grenzen, wenn sich beim Hochschalten von einem Vorwärtsgang zum anderen Vorwärtsgang der Motor vor dem Schaltvorgang bereits im Volllastbetrieb befindet. In diesem Fall wäre es nicht möglich, das Motordrehmoment M_{Mot} zwischen den Zeitpunkten t₁ und t₂ anzuheben.

### Bezugszeichenliste

- i₁: Übersetzungsverhältnis eines ersten Ganges
- i₂: Übersetzungsverhältnis eines zweiten Ganges
- M₁: übertragenes Drehmoment einer ersten Kupplung
- M₂: übertragenes Drehmoment einer zweiten Kupplung
- M_{Ab}: Abtriebsdrehmoment
- M_{K1}: Drehmomentkapazität der ersten Kupplung
- M_{K2}: Drehmomentkapazität der zweiten Kupplung
- M_{Mot}: Motordrehmoment
- M_{zw}: Drehmomentzielwert
- n₁: Drehzahl einer Eingangswelle eines ersten Teilgetriebes
- n₂: Drehzahl eines Eingangswelle eines zweiten Teilgetriebes
- n_{Mot}: Motordrehzahl
- t₁: Zeitpunkt
- t₂: Zeitpunkt
- t₃: Zeitpunkt

## Patentansprüche

1. Verfahren zum Steuern einer Antriebseinheit umfassend ein Schaltgetriebe und einen Motor, bei dem der Motor durch eine erste Kupplung auf einem ersten Getriebepfad und durch eine zweite Kupplung auf einem zweiten Getriebepfad über verschiedene Gänge mit einem Abtrieb verbunden ist,
wobei
- sich in einem Schaltvorgang einer Phase einer Drehmomentübergabe von der ersten Kupplung auf die zweite Kupplung eine Phase einer Synchronisierung der Motordrehzahl (n_{Mot}) anschließt;
- nach erfolgter Synchronisierung der Motordrehzahl (n_{Mot}) ein Motordrehmoment (M_{Mot}) einem von außen vorgegebenen Drehmomentzielwert (M_{ZW}), welcher vor der Phase der Drehmomentübergabe von dem Motordrehmoment (M_{Mot}) abweicht, angepasst worden ist,
- die Anpassung des Motordrehmoments (M_{Mot}) an den Drehmomentrielwert (M_{ZW}) im wesentlichen während der Phase der Drehmomentübergabe erfolgt,
- ein Abtriebsmoment vor dem Schaltvorgangs sich von einem Abtriebsmoment nach dem Schaltvorgang unterscheidet

2. Verfahren nach Anspruch 1, **dadurch gekennzeichnet, dass** das Abtriebsmoment vor dem Schaltvorgang dem Produkt aus Motordrehmoment (M_{Mot}) und dem Übersetzungsverhältnis (i₁) eines Quellgangs entspricht, und dass das Abtriebsmoment nach dem Schaltvorgang dem Produkt aus Drehmomentzielwert (M_{ZW}) und Übersetzungsverhältnis (i₂) eines Zielgangs entspricht, wobei ein Abtriebsmoment, das bereits vor der Phase der Synchronisierung anliegt, dem Abtriebsmoment nach dem Schaltvorgang entspricht..

3. Verfahren nach Anspruch 1 oder 2, **dadurch gekennzeichnet, dass** die Anpassung des Motordrehmoments (M_{Mot}) durch einen linearen Anstieg oder Abstieg des Motordrehmomentes (M_{Mot}) erfolgt.

4. Verfahren nach einem der Ansprüche 1 bis 3, **dadurch gekennzeichnet, dass** die Anpassung des Motordrehmomentes (M_{Mot}) sich im wesentlichen Ober die gesamte Phase der Drehmomentübergabe erstreckt.

5. Verfahren nach einem der Ansprüche 1 bis 4, **dadurch gekennzeichnet, dass** in der Phase der Drehmomentübergabe ein Verhältnis zwischen der Änderung des Motordrehmomentes M_{Mot} und einem Drehmoment M₂, das von der zweiten Kupplung übertragen wird, im wesentlichen konstant ist.

6. Verfahren nach einem der Ansprüche 1 bis 5, **dadurch gekennzeichnet, dass** in der Phase der Synchronisierung der Motordrehzahl (n_{Mot}) das Motordrehmoment (M_{Mot}) für einen begrenzten Zeitraum abgesenkt oder angehoben wird, wobei am Anfang und am Ende der Phase der Synchronisierung der Motordrehzahl (n_{Mot}) das Motordrehmoment (M_{Mot}) gleich groß ist.

## Claims

1. Method for controlling a drive unit comprising a manual transmission and an engine, in which method the engine is connected to a drive output via various gears by means of a first clutch on a first transmission path and by means of a second clutch on a second transmission path, wherein
- in a shift process, a phase of a torque transfer from the first clutch to the second clutch is followed by a phase of a synchronization of the engine rotational speed (n_{Mot}),
- after the synchronization of the engine rotational speed (n_{Mot}) has taken place, an engine torque (M_{Mot}) has been adapted to an externally predefined torque target value (M_{ZW}) which, before the phase of the torque transfer, deviates from the engine torque (M_{Mot}),
- the adaptation of the engine torque (M_{Mot}) to the torque target value (M_{ZW}) takes place substantially during the phase of the torque transfer,
- a drive output torque before the shift process differs from a drive output torque after the shift process.

2. Method according to Claim 1, **characterized in that** the drive output torque before the shift process corresponds to the product of the engine torque (M_{Mot}) and the transmission ratio (i₁) of a source gear, and **in that** the drive output torque after the shift process corresponds to the product of the torque target value (M_{ZW}) and the transmission ratio (i₂) of a target gear, with a drive output torque which already acts before the phase of the synchronization corresponding to the drive output torque after the shift process.

3. Method according to Claim 1 or 2, **characterized in that** the adaptation of the engine torque (M_{Mot}) takes place by means of a linear increase or decrease in the engine torque (M_{Mot}).

4. Method according to one of Claims 1 to 3, **characterized in that** the adaptation of the engine torque (M_{Mot}) extends substantially over the entire phase of the torque transfer.

5. Method according to one of Claims 1 to 4, **characterized in that**, in the phase of the torque transfer, a ratio between the change in the engine torque (M_{Mot}) and a torque (M₂) transmitted by the second clutch is substantially constant.

6. Method according to one of Claims 1 to 5, **characterized in that**, in the phase of the synchronization of the engine rotational speed (n_{Mot}), the engine torque (M_{Mot}) is reduced or increased for a limited period of time, with the engine torque (M_{Mot}) being the same at the beginning and at the end of the phase of the synchronization of the engine rotational speed (n_{Mot}).

## Revendications

1. Procédé de commande d'une unité d'entraînement comprenant une boîte de vitesses et un moteur, dans lequel le moteur est connecté par un premier embrayage sur une première voie de transmission et par un deuxième embrayage sur une deuxième voie de transmission par le biais de différentes vitesses, à une sortie d'entraînement, dans lequel :
- une phase de synchronisation du régime du moteur (n_{Mot}) se raccordant dans une opération de changement de vitesse à une phase de transfert de couple du premier embrayage au deuxième embrayage ;
- après la synchronisation du régime du moteur (n_{Mot}), un couple moteur (M_{Mot}) a été adapté à une valeur cible de couple prédéfinie extérieurement (M_{ZW}), qui s'écarte du couple moteur (M_{Mot}) avant la phase de transfert de couple,
- l'adaptation du couple moteur (M_{Mot}) à la valeur cible de couple (M_{ZW}) a lieu essentiellement pendant la phase de transfert de couple,
- un couple de sortie d'entraînement avant l'opération de changement de vitesse se distingue d'un couple de sortie d'entraînement après l'opération de changement de vitesse.

2. Procédé selon la revendication 1, **caractérisé en ce que** le couple de sortie d'entraînement avant l'opération de changement de vitesse correspond au produit du couple moteur (M_{Mot}) et du rapport de transmission (i₁) d'une vitesse source et **en ce que** le couple de sortie d'entraînement après l'opération de changement de vitesse correspond au produit de la valeur cible de couple (M_{ZW}) et d'un rapport de transmission (i₂) d'une vitesse cible, un couple de sortie d'entraînement, qui s'applique déjà avant la phase de synchronisation, correspondant au couple de sortie d'entraînement après l'opération de changement de vitesse.

3. Procédé selon la revendication 1 ou 2, **caractérisé en ce que** l'adaptation du couple moteur (M_{Mot}) a lieu par une augmentation ou diminution linéaire du couple moteur (M_{Mot}).

4. Procédé selon l'une quelconque des revendications 1 à 3, **caractérisé en ce que** l'adaptation du couple moteur (M_{Mot}) s'étend essentiellement sur toute la phase de transfert de couple.

5. Procédé selon l'une quelconque des revendications 1 à 4, **caractérisé en ce que** dans la phase de transfert de couple, un rapport entre la variation du couple moteur (M_{Mot}) et un couple M₂, qui est transmis par le deuxième embrayage, est essentiellement constant.

6. Procédé selon l'une quelconque des revendications 1 à 5, **caractérisé en ce que** dans la phase de synchronisation du régime du moteur (n_{Mot}), le couple moteur (M_{Mot}) est abaissé ou augmenté pendant un intervalle de temps limité, le couple moteur (M_{Mot}) étant identique au début et à la fin de la phase de synchronisation du régime du moteur (n_{Mot}).
